Europäisches Patentamt

European Patent Office

Office européen des brevets

(11) Numéro de publication: **0 286 155 B1**

(12) **FASCICULE DE BREVET EUROPEEN**

(45) Date de publication de fascicule du brevet: **24.06.92** (51) Int. Cl.⁵: **C01B 13/32**, C01G 25/02

(21) Numéro de dépôt: **88200481.5**

(22) Date de dépôt: **15.03.88**

(54) **Procédé pour la fabrication d'une poudre d'oxydes métalliques mixtes, et poudres d'oxydes métalliques mixtes.**

(30) Priorité: **26.03.87 BE 8700311**

(43) Date de publication de la demande:
**12.10.88 Bulletin 88/41**

(45) Mention de la délivrance du brevet:
**24.06.92 Bulletin 92/26**

(84) Etats contractants désignés:
**AT BE CH DE ES FR GB GR IT LI LU NL SE**

(56) Documents cités:
**EP-A- 0 177 198**
**EP-A- 0 199 930**

(73) Titulaire: **SOLVAY**
**Rue du Prince Albert, 33**
**B-1050 Bruxelles(BE)**

(72) Inventeur: **Legrand, Franz**
**Rue des Vaches, 71**
**B-7300 Ouaregnon(BE)**
Inventeur: **Lerot, Luc**
**Avenue du Centaure, 31**
**B-1200 Bruxelles(BE)**
Inventeur: **De Bruycker, Patricia**
**Avenue Paul Deschanel, 21**
**B-1030 Bruxelles(BE)**

(74) Mandataire: **Anthoine, Paul**
**SOLVAY Département de la Propriété Indus-**
**trielle 310, rue de Ransbeek**
**B-1120 Bruxelles(BE)**

Rank Xerox (UK) Business Services

**Description**

L'invention a pour objet un procédé pour la fabrication de poudres d'oxydes métalliques mixtes.

Il est bien connu que l'on peut préparer des poudres d'oxydes métalliques mixtes à partir de la cohydrolyse d'alcoolates métalliques. A cet effet, on prépare généralement des solutions diluées d'alcoolates métalliques dans un alcool, et on mélange ces solutions avec une solution alcoolique d'eau. La réaction est généralement opérée sous une atmosphère inerte d'azote, à la température ambiante. A l'issue du procédé, on recueille la poudre d'oxydes métalliques mixtes qui a précipité (Better Ceramics Through Chemistry - Materials Research Society Symposia Proceedings - Vol. 32 - 1984 - Elsevier Science Publishing Co., Inc. - BRUCE FEGLEY et al : "Synthesis, characterization, and processing of monosized ceramic powders", pages 187 à 197; brevet US-A-4,543,341). Ce procédé connu a été conçu pour la production de poudres d'oxyes métalliques de très grande pureté chimique, destinées à la mise en oeuvre de matériaux céramiques.

En règle générale, les performances des matériaux céramiques sont liées à l'homogénéité des poudres d'oxydes métalliques mixtes utilisées. A cet effet, on a maintenant trouvé que la morphologie des poudres obtenues par cohydrolyse d'alcoolates métalliques, en particulier leur homogénéité, peut être influencée par les conditions dans lesquelles la cohydrolyse est exécutée. L'invention vise dès lors à fournir un procédé pour la fabrication de poudres d'oxydes métalliques mixtes, qui sont à l'état de grains réguliers et présentent une grande homogénéité chimique.

En conséquence, l'invention concerne un procédé pour la fabrication d'une poudre d'oxydes métalliques mixtes, selon lequel on procède à la cohydrolyse d'alcoolates métalliques en présence d'un composé organique acide contenant plus de six atomes de carbone dans sa molécule.

Dans le cadre de l'invention, on entend désigner par poudre d'oxydes métalliques mixtes, une poudre qui contient des oxydes d'au moins deux métaux différents. Selon l'invention, la poudre peut contenir davantage que deux oxydes métalliques différents.

Dans le procédé selon l'invention, les alcoolates métalliques sont tous composés comprenant au moins un métal relié par l'intermédiaire d'un atome d'oxygène, à un groupement hydrocarboné tel qu'un groupement aromatique ou un groupement aliphatique linéaire ou cyclique, saturé ou insaturé, non substitué ou substitué partiellement ou totalement. Les alcoolates métalliques à groupements aliphatiques sont spécialement recommandés; ceux à groupements aliphatiques saturés non substitués sont préférés, tels que, par exemple, les groupements méthyl, éthyl, n-propyl iso-propyl, n-butyl et iso-butyl.

Dans le procédé selon l'invention, les groupements hydrocarbonés des alcoolates métalliques mis en oeuvre peuvent être identiques ou différents.

La cohydrolyse consiste à décomposer les alcoolates métalliques simultanément au moyen d'eau pour produire les oxydes métalliques hydratés correspondants et un alcool ou mélange d'alcools. On peut travailler indifféremment avec un excès ou un défaut d'eau par rapport à la quantité strictement nécessaire pour décomposer la totalité des alcoolates. La cohydrolyse est réglée, de manière connue en soi, pour que les oxydes métalliques précipitent à l'état d'une poudre, sans gélification en masse du milieu réactionnel résultant de l'hydrolyse.

Selon l'invention, la cohydrolyse est opérée en présence d'un acide organique.

Les acides carboxyliques saturés et insaturés et leurs dérivés sont spécialement recommandés. On sélectionne des acides contenant plus de six atomes de carbone dans leur molécule. Des acides carboxyliques qui se sont révélés spécialement avantageux sont ceux contenant au moins huit atomes de carbone dans leur molécule, tels que les acides octanoïque, laurique, palmitique, isopalmitique, oléique et stéarique. Les acides carboxyliques comprenant plus de dix atomes de carbone dans leur molécule sont préférés.

On a observé que l'acide organique agit sur la morphologie de la poudre d'oxydes métalliques mixtes, notamment en inhibant l'agglomération des grains et en conférant à ceux-ci un profil sphérique. En règle générale, il doit être mis en oeuvre en quantité suffisante pour que son action se manifeste sur la morphologie de la poudre, en évitant toutefois de dépasser un seuil au-delà duquel son action sur la qualité de la poudre pourrait être négative. En pratique, la quantité optimum d'acide organique qu'il convient de mettre en oeuvre dépend de nombreux paramètres parmi lesquels figurent notamment l'acide organique sélectionné (principalement la longueur de sa chaîne carbonée), les alcoolates métalliques mis en oeuvre, ainsi que les conditions opératoires; elle doit être déterminée dans chaque cas particulier en fonction de la qualité recherchée pour la morphologie de la poudre. En général, il convient de réaliser un rapport molaire entre l'acide organique et le mélange des alcoolates métalliques au moins égal à $10^{-3}$; dans le cas d'un acide carboxylique, des rapports molaires préférés sont ceux situés entre 0,005 et 3; les rapports molaires compris entre 0,015 et 0,35 conviennent bien.

La cohydrolyse peut être effectuée dans l'air ambiant. Pour éviter le risque d'une décomposition incontrôlée des alcoolates métalliques, on préfère toutefois, selon une forme de réalisation particulière du procédé selon l'invention, exécuter la cohydrolyse sous une atmosphère gazeuse exempte d'humidité. L'air sec, déshydraté, l'azote et l'argon sont des exemples d'atmosphères utilisables dans cette forme de réalisation de l'invention. En principe, la température et la pression ne sont pas critiques. En général, dans la majorité des cas, on peut travailler à la température ambiante et la pression atmosphérique normale.

Dans l'exécution du procédé selon l'invention, il est recommandé de réaliser un mélange homogène des alcoolates métalliques, de l'eau et de l'acide organique le plus rapidement possible, avant que débute la nucléation. A cet effet, les alcoolates et l'eau sont avantageusement mis en oeuvre à l'état de solutions organiques. Le cas échéant, il est opportun que le solvant organique des alcoolates soit exempt d'eau. Il convient par ailleurs d'éviter la présence de particules solides dans les solutions organiques des alcoolates et de l'eau. On peut utiliser des solvants organiques identiques ou différents pour chaque alcoolate et pour l'eau. Dans le cas de solvants organiques différents, il convient généralement que ceux-ci soient miscibles. Il convient par ailleurs de choisir des solvants organiques dans lesquels les oxydes métalliques à produire ne sont pas solubles. Les alcools et leurs dérivés conviennent généralement bien, notamment le méthanol, l'éthanol, le n-propanol, l'iso-propanol, le n-butanol et l'iso-butanol.

Les taux de dilution optimum des alcoolates et de l'eau dans leurs solvants organiques respectifs dépendent de divers facteurs, notamment des alcoolates mis en oeuvre, de la quantité et de la nature du composé organique acide sélectionné, de la température de travail, du taux de turbulence du milieu réactionnel et de la qualité recherchée pour la poudre d'oxydes métalliques; ils doivent être déterminés dans chaque cas particulier par un travail de routine au laboratoire. En règle générale, on recommande que la solution organique de chaque alcoolate ou du mélange d'alcoolates et la solution organique d'eau contiennent respectivement moins de 2 moles d'alcoolate métallique par litre et moins de 5 moles d'eau par litre. Des concentrations molaires spécialement avantageuses sont celles comprises entre 0,05 et 1 pour la solution d'alcoolate métallique et entre 0,1 et 3 pour la solution organique d'eau.

Dans le procédé selon l'invention, on coprécipite les oxydes métalliques par cohydrolyse des alcoolates métalliques, en présence de l'acide organique. A cet effet, divers modes opératoires sont possibles.

Selon un premier mode opératoire, on introduit séparément mais simultanément, dans une chambre de réaction, chaque alcoolate métallique (par exemple à l'état d'une solution organique), l'eau (de préférence à l'état dissous dans un solvant organique) et l'acide organique. Dans une variante de ce mode d'exécution du procédé, on réalise d'abord un mélange homogène des alcoolates métalliques, par exemple en les dissolvant dans un solvant commun, avant d'y ajouter l'eau et l'acide organique.

Selon un second mode opératoire, on réalise d'abord un mélange homogène des alcoolates métalliques, on ajoute l'acide organique à ce mélange ou à l'eau, puis on réunit l'eau et le mélange d'alcoolates.

Dans chacun de ces modes opératoires, on peut opérer de la manière décrite dans la demande de brevet GB-A-2168334.

A l'issue de la réaction de cohydrolyse, on recueille une poudre de fines particules constituées d'un mélange d'oxydes métalliques à l'état amorphe, plus ou moins hydraté. La poudre est formée, pour l'essentiel, de particules sphériques, présentant un diamètre n'excédant pas 5 microns, habituellement compris entre 0,05 et 2 microns. Elle est généralement associée à de l'humidité et des résidus organiques de la réaction d'hydrolyse, tels que les solvants organiques et l'acide organique.

La poudre peut éventuellement subir un séchage et un traitemnt thermique à une température appropriée, pour éliminer l'acide organique, l'eau et les solvants organiques qu'elle contient. Le traitement thermique peut être réglé pour contrôler la porosité ou l'éliminer complètement. Il peut par ailleurs être réglé pour provoquer une cristallisation des oxydes métalliques.

Le procédé selon l'invention s'applique à la production de poudres d'oxydes de tous métaux connus, telles que, par exemple, des poudres d'oxyde de titane dopé par un oxyde métallique ou un mélange d'oxydes métalliques tels ques les oxydes de tantale, de niobium, de baryum, de cuivre et de strontium, des poudres d'oxyde de silicium dopé par de l'oxyde de bore et des poudres d'oxyde de zirconium dopé par de l'oxyde d'aluminium. Il est spécialement adapté à la production de poudres d'oxydes métalliques mixtes, destinées à la mise en oeuvre de matériaux céramiques qui, par définition, sont des matériaux inorganiques non métalliques, dont la mise en oeuvre au départ d'une poudre requiert des traitements à haute température, tels que des traitements de fusion ou de frittage (P. William Lee - "Ceramics" - 1961 - Reinhold Publishing Corp. - page 1; Kirk Othmer Encyclopedia of Chemical Technology - Third edition - Volume 5 - 1979; John Wiley & Sons, USA - pages 234 à 236 : "Ceramics, scope"). Le procédé selon l'invention trouve notamment une application intéressante pour la production de poudres mixtes d'oxydes de métaux appartenant au groupe des terres rares et aux groupes II, III et IV du tableau périodique des éléments; il s'applique bien à la production de poudres de zircone stabilisée comprenant au moins 50 % molaire (par exemple entre 75 et 95 %) d'oxyde de zirconium.

Les poudres obtenues par le procédé selon l'invention et tout spécialement les poudres de zircone stabilisée par au moins un autre oxyde métallique se particularisent par une homogénéité chimique remarquable, non seulement au niveau global de la poudre, mais aussie au niveau du grain. Par ailleurs, les poudres obtenues sont pratiquement exemptes d'agglomérats et leur distribution granulométrique est peu étendue.

L'invention concerne dès lors aussi des poudres d'oxydes métalliques mixtes dans lesquelles pour chaque grain de la poudre le rapport molaire moyen ($R_1$) de chaque oxyde métallique à la somme des oxydes métalliques de la poudre et le rapport molaire moyen ($R_2$) dudit oxyde métallique à la somme des oxydes métalliques dans un grain de la poudre sont tels que :

$$\frac{|R_1 - R_2|}{R_1} \leq 0,30$$

et dans lesquelles, pour chaque grain de la poudre et pour chaque oxyde métallique qui la constitue, le rapport molaire $R_2$ précité et le rapport molaire ($R_3$) dudit oxyde métallique à la somme des oxydes métalliques en toute zone de 0.1 micromètre de diamètre du gain sont tels que :

$$\frac{|R_2 - R_3|}{R_2} \leq 0,30$$

Des poudres d'oxydes métalliques mixtes conformes à l'invention sont celles dans lesquelles les rapports molaires $R_1$, $R_2$, $R_3$ précités sont tels que :

$$0,01 \leq \frac{|R_1 - R_2|}{R_1} \leq 0,30$$

et/ou

$$0,05 \leq \frac{|R_2 - R_3|}{R_2} \leq 0,30$$

Les poudres d'oxydes métalliques mixtes selon l'invention sont constituées de grains sphériques cristallisés dont le diamètre est compris entre 0,05 et 2 microns, de préférence entre 0,2 et 0,7 micron.

Des poudres conformes à l'invention, qui sont préférées sont celles dans lesquelles les oxydes métalliques qui les constituent sont des oxydes de métaux sélectionnés parmi ceux du groupe des terres rares et des groupes II, III et IV du tableau périodique des éléments. Ces poudres trouvent des applications intéressantes dans la mise en oeuvre des matériaux céramiques. Des exemples de telles poudres sont celles d'oxyde de zirconium dopé par au moins un oxyde d'au moins un autre métal appartenant à l'un des groupes précités, par exemple le titane, l'yttrium, le calcium, le magnésium, le baryum, le néodymium et le lanthane. Parmi ces poudres, conformes à l'invention, les plus avantageuses sont celles comprenant au moins 50 % molaire, de préférence entre 75 et 98 % molaire, d'oxyde de zirconium.

Des poudres conformes à l'invention sont celles obtenues par le procédé selon l'invention, tel que défini plus haut. L'invention concerne en particulier des poudres d'oxydes métalliques mixtes, dans lesquelles le rapport précité $|R_1 - R_2| : R_1$ est inférieur à 0,25 et des poudres dans lesquelles le rapport $|R_2 - R_3| : R_2$ précité est inférieur à 0,20, notamment des poudres pour lesquelles :

$$0,03 \leq \frac{|R_1 - R_2|}{R_1} \leq 0,20$$

et/ou

$$0,08 \leq \frac{|R_2 - R_3|}{R_2} \leq 0,18$$

Les quelques exemples dont la description va suivre servent à illustrer l'invention. Ces exemples sont donnés en référence aux dessins annexés.

La figure 1 est un diagramme relatif à une microanalyse le long d'un grain, dans une coupe microtomique d'une poudre selon l'invention;

Les figures 2 à 7 sont six reproductions photographiques de poudres de zircone dopée, conformes à l'invention, au grossissement 20 000 X.

Les exemples concernent des essais de fabrication de poudres de zircone dopée par un autre oxyde métallique, selon le processus opératoire suivant, conforme à l'invention.

Dans une chambre de réaction maintenue sous atmosphère d'azote anhydre, on a introduit séparément une solution organique d'un alcoolate de zirconium et une solution organique d'un alcoolate d'un autre métal. Après un temps de maturation de quelques minutes, suffisant pour obtenir une solution homogène, on a ajouté à celle-ci une quantité déterminée d'acide carboxylique et on a soumis le mélange résultant à une agitation modérée pendant quelques minutes. Puis, tout en maintenant le mélange sous une forte agitation, on y a ajouté en une fois une quantité définie d'une solution organique d'eau. L'agitation a été réglée de manière à obtenir un mélange réactionnel homogène, avant que débute la nucléation. On a ensuite fait subir au mélange réactionnel un mûrissage de 2 heures sous agitation modérée. A l'issue du mûrissage, on a soumis le mélange réactionnel à une centrifugation et on a recueilli la poudre d'oxydes métalliques mixtes que l'on a lavée avec de l'alcool anhydre, puis séchée au moyen d'un courant d'air à température ambiante.

Dans les exemples, on a calculé le diamètre moyen des poudres à partir de mesures sur les reproductions photographiques, le diamètre moyen étant défini par la relation suivante (G. HERDAN - "Small particles statistics" - 2ème édition - 1960 - Butterworths - pages 10 et 11) :

$$d = \frac{\sum n_i d_i}{\sum n_i}$$

où $n_i$ désigne le nombre de particules de diamètre $d_i$.

Exemple 1

Cet exemple concerne la fabrication d'une poudre de zircone dopée par de l'oxyde d'yttrium. Il se caractérise par les conditions opératoires suivantes :
- solutions organiques d'alcoolates métalliques :
  + 100 ml d'une solution 0,2 M de n-butoxyde de zirconium dans de l'éthanol,
  + 3 ml d'une solution 0,4 M d'isopropoxyde d'yttrium dans de l'isopropanol;
- acide carboxylique : $1,6.10^{-3}$ mole d'acide oléique;
- solution organique d'eau : 100 ml d'une solution 0,7 M d'eau dans de l'éthanol
- température de travail : 25°C.

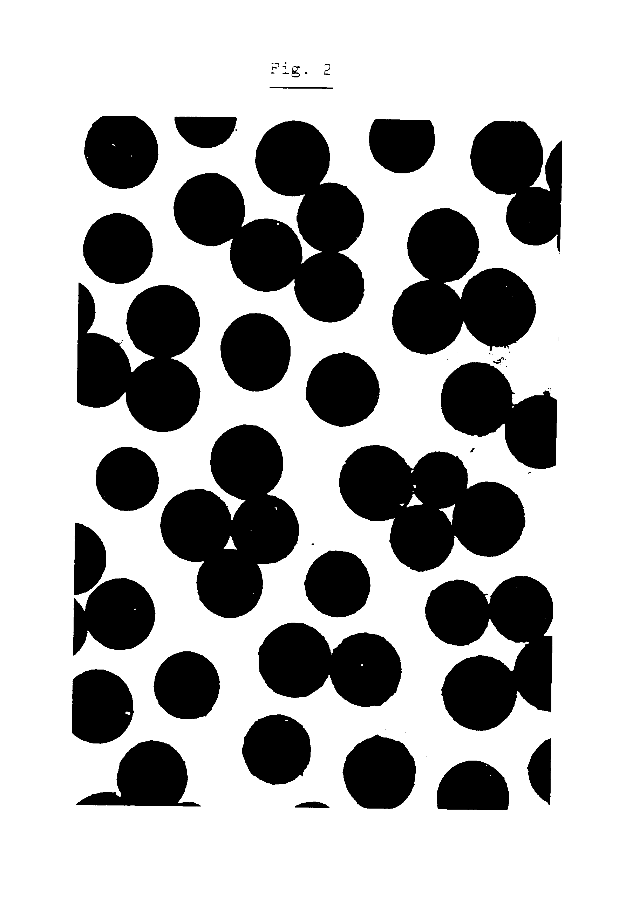

La poudre obtenue est représentée à la figure 2. Elle présente un diamètre moyen de particules égal à 0,87 micron.

On a par ailleurs procédé aux mesures suivantes du rapport molaire :

$$R = \frac{\text{moles } Y_2O_3}{\text{moles } Y_2O_3 + \text{moles } ZrO_2}$$

(a) sur un échantillon global de la poudre;

(b) sur cinq grains prélevés au hasard dans la poudre;

(c) en différentes zones le long d'un diamètre d'un grain de la poudre, au sein d'une coupe microtomique ayant une épaisseur d'environ 0,1 micron.

La mesure (a) a été obtenue par une analyse chimique.

La mesure (b) a été obtenue par microanalyse X au moyen d'un microscope électronique à balayage de la firme CAMBRIDGE, série 200, équipé d'un dispositif de microanalyse X en dispersion d'énergie de la firme TRACOR.

La mesure (c) a été obtenue par microanalyse X au moyen d'un microscope à transmission de marque SIEMENS, type 102, équipé d'un dispositif de microanalyse X en dispersion d'énergie de la firme KEVEX.

Les résultats des mesures (a) et (b) sont consignés au tableau suivant.

| | Rapport molaire $\dfrac{Y_2O_3}{Y_2O_3+ZrO_2}$ |
|---|---|
| (a) Echantillon global : R | 3,3 |
| (b) Sur cinq grains : | |
| grain n° 1 : $R_2$ | 3,1 |
| grain n° 2 : $R_2$ | 3,1 |
| grain n° 3 : $R_2$ | 2,9 |
| grain n° 4 : $R_2$ | 2,9 |
| grain n° 5 : $R_2$ | 3,8 |
| moyenne : $R_1$ | 3,2 |

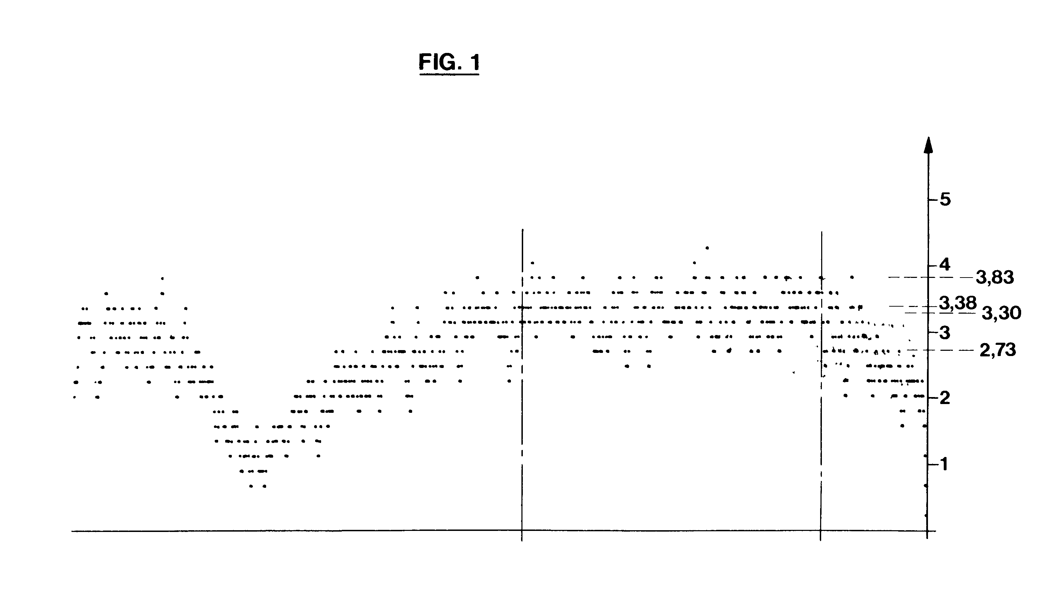

Les résultats de la mesure (c) sont reproduits sur le diagramme de la figure 1 qui montre la distribution de l'intensité du rayonnement relatif à la détection de l'yttrium. L'axe horizontal du diagramme schématise la ligne de balayage de l'analyseur et l'axe des ordonnées exprime la concentration molaire en oxyde d'yttrium (Rapport molaire $R_3$ défini plus haut).

D'un examen du tableau et du diagramme de la figure 1, on tire les conclusions suivantes :

- pour l'échantillon des cinq grains :

$$0,03 \leq \frac{|R_1 - R_2|}{R_1} \leq 0,19$$

- le long du diamètre d'un grain :

$$0,08 \leq \frac{|R_2 - R_3|}{R_2} \leq 0,17$$

Exemple 2

Cet exemple diffère de l'exemple 1 par les conditions opératoires suivantes :

- solutions organiques d'alcoolates métalliques :
  + 100 ml d'une solution 0,2 M de n-propoxyde de zirconium dans du propanol,
  + 3 ml d'une solution 0,4 M d'isopropoxyde d'yttrium dans de l'isopropanol,

- acide carboxylique : $4,8.10^{-3}$ mole d'acide oléique;
- solution organique d'eau : 100 ml d'une solution 1,25 M d'eau dans du propanol;
- température de travail : 25°C.

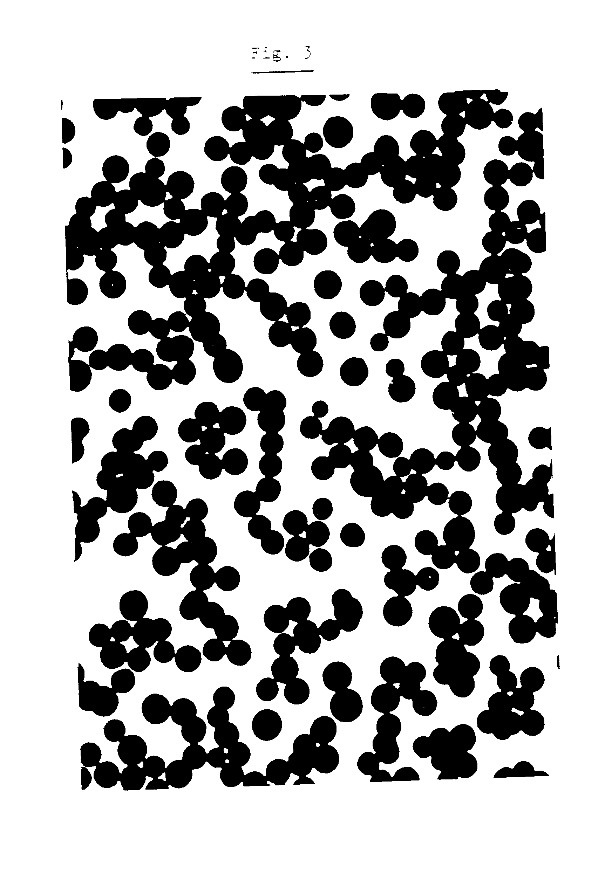

La poudre obtenue est représentée à la figure 3. Elle présente un diamètre moyen de particules égal à 0,32 micron.

Exemple 3

Cet exemple a trait à la préparation d'une poudre de zircone dopée par du bioxyde de titane. Il se caractérise par les paramètres opératoires suivants :
- solutions organiques d'alcoolates métalliques :
  + 100 ml d'une solution 0,2 M de n-propoxyde de zirconium dans du n-propanol,
  + 4 ml d'une solution 0,5 M de n-propoxyde de titane dans du n-propanol;
- acide carboxylique : $3,2.10^{-3}$ mole d'acide oléique;
- solution organique d'eau : 100 ml d'une solution 0,7 M d'eau dans du n-propanol;
- température de travail : 25°C.

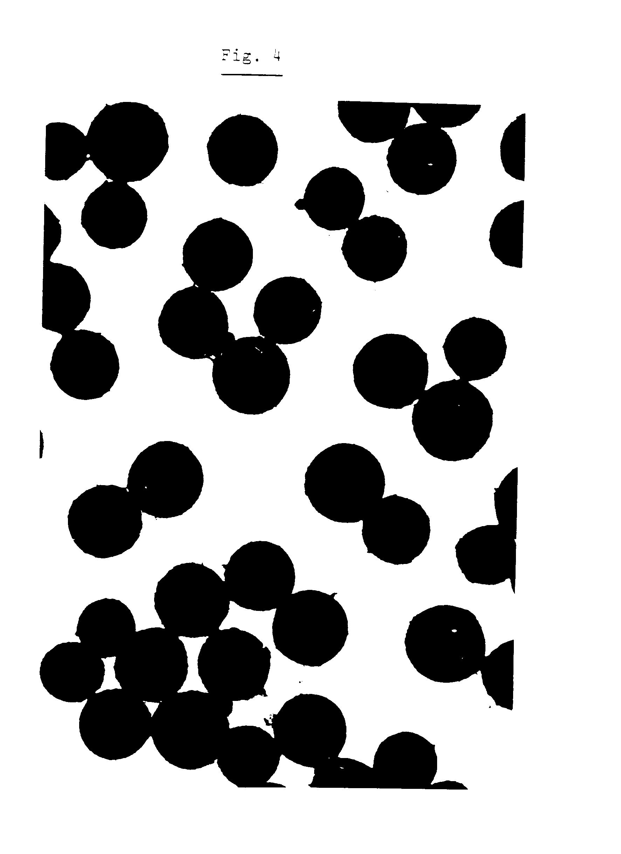

La figure 4 montre un échantillon de la poudre obtenue. Celle-ci est constituée de particules sphériques de zircone et de bioxyde de titane, dont le diamètre moyen égale 0,88 micron.

Exemple 4

Dans cet exemple, on a préparé une poudre de zircone et d'oxyde de calcium. A cet effet, les conditions opératoires suivantes ont été mises en oeuvre :
- solutions organiques d'alcoolates métalliques :
  + 30 ml d'une solution 0,2 M de n-propoxyde de zirconium dans du n-propanol,
  + 30 ml d'une solution 0,46 M d'un mélange de n-butoxyde et de n-propoxyde de zirconium et 0,08 M d'éthoxyde de calcium dans un mélange de n-propanol et d'isopropanol;
- acide carboxylique : $4,8.10^{-3}$ mole d'acide oléique;
- solution organique d'eau : 100 ml d'une solution 0,7 M d'eau dans du n-propanol;
- température de travail : 70°C

Dans l'exécution de cet exemple, on a d'abord mélangé les deux solutions d'alcoolates métalliques, puis on a dilué le mélange résultant par 20 ml d'isopropanol, avant d'y introduire l'acide oléique. On a ensuite poursuivi comme exposé plus haut, pour les exemples 1 à 3.

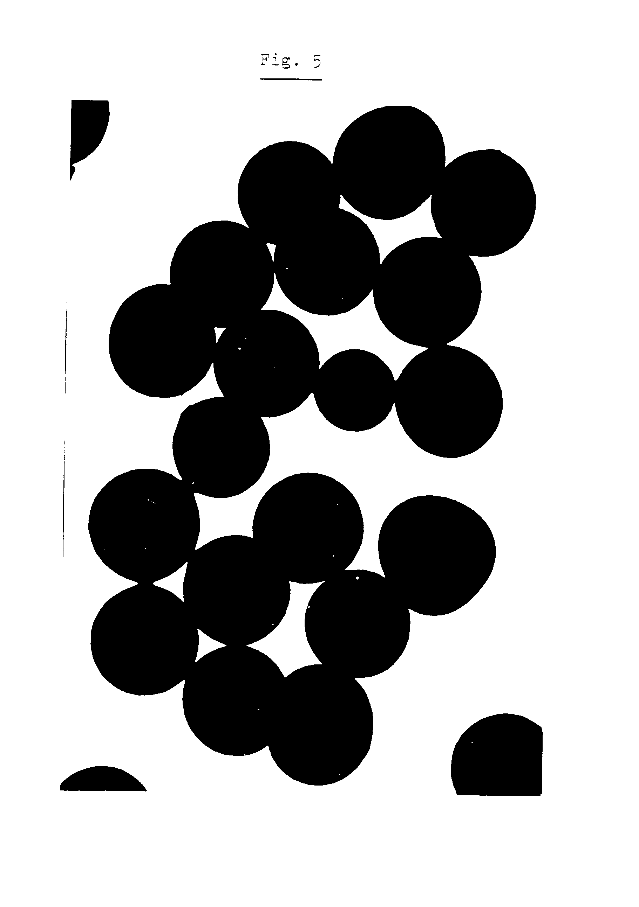

La figure 5 montre un échantillon de la poudre obtenue. Celle-ci est à l'état de grains sphériques dont le diamètre moyen est égal à 1,2 micron.

Exemple 5

Dans cet exemple, on a préparé une poudre d'oxyde de zirconium et d'oxyde de magnésium. On a opéré comme pour l'exemple 1, avec les réactifs suivants :
- solutions organiques d'alcoolates métalliques :
  + 50 ml d'une solution 0,2 M de n-propoxyde de zirconium dans du n-propanol,
  + 15 ml d'une solution 0,67 M de n-propoxyde de zirconium et 0,12 M d'éthoxyde de magnésium dans du n-propanol;
- acide carboxylique : $3,2.10^{-3}$ mole d'acide oléique;
- solution organique d'eau : 100 ml d'une solution 0,7 M d'eau dans du n-propanol
- température de travail : 50°C.

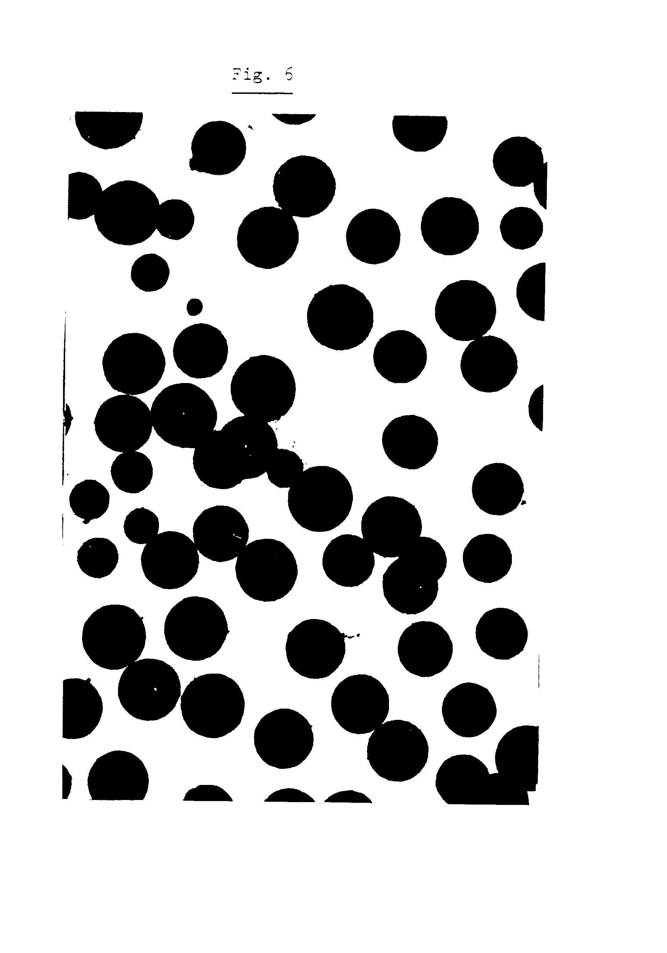

On a reproduit à la figure 6 un échantillon de la poudre obtenue.

Celle-ci est formée de grains sphériques dont la diamètre moyen égale 0,68 micron.

Exemple 6

Cet exemple concerne la préparation d'une poudre de zircone dopée par de l'oxyde de néodymium.

On a opéré comme exposé plus haut, pour l'exemple 1, en mettant en oeuvre les réactifs suivants :
- solutions organiques d'alcoolates métalliques :
  + 50 ml d'une solution 0,2 M de n-propoxyde de zirconium dans du n-propanol,
  + 40 ml d'une solution 0,06 M d'isopropoxyde de néodymium dans de l'isopropanol;
- acide carboxylique : $2,4.10^{-3}$ mole d'acide oléique;

- solution organique d'eau : 50 ml d'une solution 1,25 M d'eau dans du n-propanol;
- température de travail : 50°C.

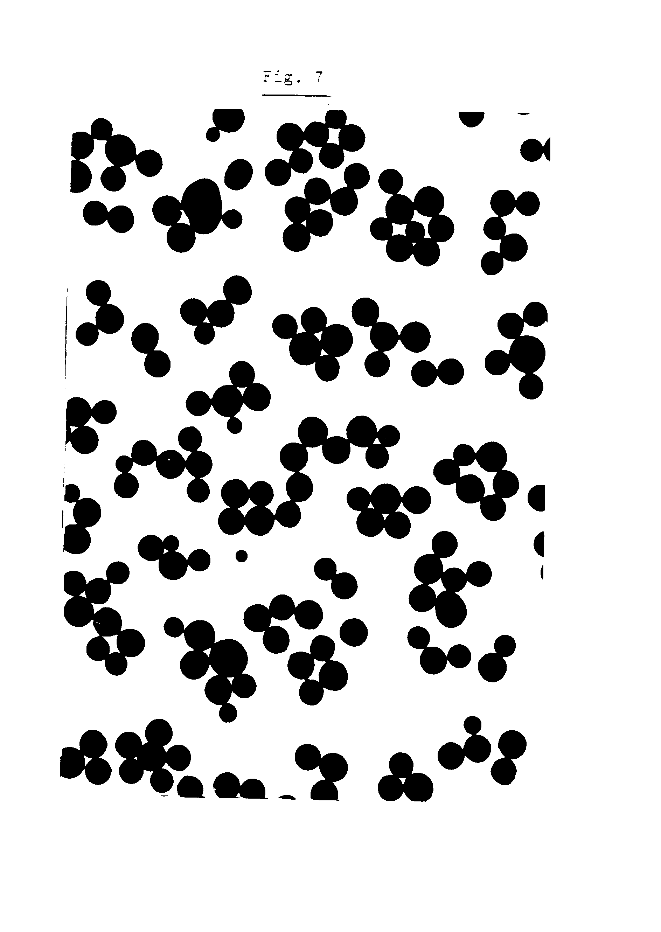

La figure 7 montre un échantillon de la poudre obtenue. Celle-ci est formée de particules phériques d'oxyde de zirconium et d'oxyde de néodymium, dont le diamètre moyen égale 0,3 micron.

## Revendications

1. Procédé pour la fabrication d'une poudre d'oxydes métalliques mixtes, selon lequel on procède à la cohydrolyse d'alcoolates métalliques, caractérisé en ce qu'on procède à la cohydrolyse en présence d'un acide organique contenant plus de six atomes de carbone dans sa molécule.

2. Procédé selon la revendication 1, caractérisé en ce qu'on sélectionne l'acide organique parmi les acides carboxyliques.

3. Procédé selon la revendication 1 ou 2, caractérisé en ce que l'acide organique est mis en oeuvre en une quantité molaire comprise entre 0,005 et 3 fois la quantité molaire de l'alcoolate métallique.

4. Procédé selon l'une quelconque des revendications 1 à 3, caractérisé en ce que, pour réaliser la cohydrolyse, on mélange les alcoolates métalliques, l'eau et l'acide organique de manière à réaliser un mélange homogène avant que débute la nucléation.

5. Procédé selon l'une quelconque des revendications 1 à 4, caractérisé en ce que les alcoolates métalliques sont mis en oeuvre à l'état de solutions alcooliques contenant entre 0,05 et 1 mole d'alcoolate par litre et l'eau est mise en oeuvre à l'état d'une solution alcoolique d'eau contenant entre 0,1 et 3 moles d'eau par litre.

6. Procédé selon l'une quelconque des revendications 1 à 5, caractérisé en ce qu'on sélectionne les alcoolates métalliques parmi les alcoolates des métaux des terres rares et des métaux des groupes II, III et IV du tableau périodique des éléments.

7. Poudres d'oxydes métalliques mixtes constituées de grains sphériques cristallisés, dont le diamètre est compris entre 0,05 et 2 micromètres dans lesquelles, pour chaque grain de la poudre et pour chaque oxyde métallique qui la constitue, on vérifie les expressions suivantes :

$$\frac{|R_1 - R_2|}{R_1} \leq 0,30$$

et

$$\frac{|R_2 - R_3|}{R_2} \leq 0,30$$

dans lesquelles,

$R_1$ est le rapport molaire moyen de chaque oxyde métallique à la somme des oxydes métalliques de la poudre

$R_2$ est le rapport molaire moyen du même oxyde métallique à la somme des oxydes métalliques dans un grain de la poudre

$R_3$ est le rapport molaire du même oxyde métallique à la somme des oxydes métalliques en toute zone de 0,1 micromètre de diamètre du grain.

8. Poudres selon la revendication 7, caractérisées en ce que les rapports molaires $R_1$, $R_2$, $R_3$ sont tels que

EP 0 286 155 B1

$$0,03 \leq \frac{|R_1 - R_2|}{R_1} \leq 0,20$$

et/ou

$$0,08 \leq \frac{|R_2 - R_3|}{R_2} \leq 0,18$$

9.  Poudres selon la revendication 7 ou 8, caractérisées en ce que les oxydes métalliques sont des oxydes de métaux sélectionnés parmi les métaux du groupe des terres rares et les métaux des groupes II, III et IV du tableau périodique des éléments.

10.  Poudres selon la revendication 9, caractérisées en ce qu'elles comprennent entre 75 et 98 % molaire d'oxyde de zirconium.

11.  Poudres selon l'une quelconque des revendications 7 à 10, pouvant être obtenues par un procédé conforme à l'une quelconque des revendications 1 à 6.

**Claims**

1.  Process for the manufacture of a powder of mixed metal oxides, according to which the cohydrolysis of metal alcoholates is carried out, characterised in that the cohydrolysis is carried out in the presence of an organic acid containing more than six carbon atoms in its molecule.

2.  Process according to Claim 1, characterised in that the organic acid is selected from carboxylic acids.

3.  Process according to Claim 1 or 2, characterised in that the organic acid is employed in a molar quantity of between 0.005 and 3 times the molar quantity of the metal alcoholate.

4.  Process according to any one of Claims 1 to 3, characterised in that, in order to carry out the cohydrolysis, the metal alcoholates, water and the organic acid are mixed so as to produce a homogeneous mixture before nucleation begins.

5.  Process according to any one of Claims 1 to 4, characterised in that the metal alcoholates are employed in the form of alcoholic solutions containing between 0.05 and 1 mole of alcoholate per litre, and water is employed in the form of an alcoholic solution of water containing between 0.1 and 3 moles of water per litre.

6.  Process according to any one of Claims 1 to 5, characterised in that the metal alcoholates are selected from alcoholates of rare-earth metals and of metals of groups II, III and IV of the Periodic Table of the elements.

7.  Mixed metal oxide powders consisting of crystallized spherical particles whose diameter is between 0.05 and 2 micrometres, in which, in the case of each particle of the powder and in the case of each metal oxide of which it consists, the following expressions are verified:

$$\frac{\left| R_1 - R_2 \right|}{R_1} \leq 0.30$$

and

$$\frac{\left| R_2 - R_3 \right|}{R_2} \leq 0.30$$

9

in which

R$_1$ is the mean molar ratio of each metal oxide to the sum of the metal oxides in the powder

R$_2$ is the mean molar ratio of the same metal oxide to the sum of the metal oxides in a particle of the powder

R$_3$ is the molar ratio of the same metal oxide to the sum of the metal oxides in any zone of 0.1 micrometre diameter in the particle.

**8.** Powders according to Claim 7, characterised in that the molar ratios R$_1$, R$_2$ and R$_3$ are such that

$$0.03 \leq \frac{\left| R_1 - R_2 \right|}{R_1} \leq 0.20$$

$$\text{and/or}$$

$$0.08 \leq \frac{\left| R_2 - R_3 \right|}{R_2} \leq 0.18$$

**9.** Powders according to Claim 7 or 8, characterised in that the metal oxides are metal oxides selected from the metals of the rare-earths group and the metals of groups II III and IV of the Periodic Table of the elements.

**10.** Powders according to Claim 9, characterised in that they contain between 75 and 98 mol% of zirconium oxide.

**11.** Powders according to any one of Claims 7 to 10, capable of being obtained by a process in accordance with any one of Claims 1 to 6.

**Patentansprüche**

**1.** Verfahren zur Herstellung eines Pulvers aus gemischten Metalloxyden, gemäß dem man die Cohydrolyse von Metallalkoholaten vornimmt, dadurch gekennzeichnet, daß man die Cohydrolyse in Anwesenheit einer organischen Säure vornimmt, die mehr als sechs Kohlenstoffatome in ihrem Molekül enthält.

**2.** Verfahren nach Anspruch 1, dadurch gekennzeichnet, daß man die organische Säure unter den Carbonsäuren auswählt.

**3.** Verfahren nach Anspruch 1 oder 2, dadurch gekennzeichnet, daß die organische Säure in einer molaren Menge eingesetzt wird, die die 0,005- bis 3-fache molare Menge des Metallalkoholats beträgt.

**4.** Verfahren nach einem der Ansprüche 1 bis 3, dadurch gekennzeichnet, daß man zur Durchführung der Cohydrolyse die Metallalkoholate, das Wasser und die organische Säure mischt, derart, daß eine homogene Mischung hergestellt wird, bevor die Ausfällung beginnt.

**5.** Verfahren nach einem der Ansprüche 1 bis 4, dadurch gekennzeichnet, daß die Metallalkoholate in Form von alkoholischen Lösungen, die zwischen 0,05 und 1 Mol Alkoholat pro Liter enthalten, eingesetzt werden und das Wasser in Form einer alkoholischen Lösung von Wasser, die zwischen 0,1 und 3 Mol Wasser pro Liter enthält, eingesetzt wird.

**6.** Verfahren nach einem der Ansprüche 1 bis 5, dadurch gekennzeichnet, daß man die Metallalkoholate unter den Alkoholaten der seltenen Erdmetalle und den Metallen der Gruppen II, III und IV der Tabelle des periodischen Systems auswählt.

**7.** Pulver aus gemischten Metalloxyden, die aus kristallisierten sphärischen Körnchen mit einem Durchmesser zwischen 0,05 und 2 Micrometer bestehen, bei denen für jedes Körnchen des Pulvers und für jedes Metalloxyd das dieses bildet, die folgenden Gleichungen erfüllt werden:

$$\frac{|R_1 - R_2|}{R_1} \leq 0,30$$

und

$$\frac{|R_2 - R_3|}{R_2} \leq 0,30$$

in denen
$R_1$ das mittlere molare Verhältnis jedes Metalloxyds zur Summe der Metalloxyde des Pulvers,
$R_2$ das mittlere molare Verhältnis desselben Metalloxyds zur Summe der Metalloxyde in einem Körnchen des Pulvers,
$R_3$ das mittlere molare Verhältnis desselben Metalloxyds zur Summe der Metalloxyde in jeder Zone von 0,1 Mikrometer Durchmesser des Körnchens
darstellen.

8.  Pulver nach Anspruch 7, dadurch gekennzeichnet, daß die molaren Verhältnisse $R_1$, $R_2$, $R_3$ derart sind, daß

$$0,03 \leq \frac{|R_1 - R_2|}{R_1} \leq 0,20$$

und/oder

$$0,08 \leq \frac{|R_2 - R_3|}{R_2} \leq 0,18$$

9.  Pulver nach Anspruch 7 oder 8, dadurch gekennzeichnet, daß die Metalloxyde von Metallen sind, ausgewählt aus der Gruppe der seltenen Erdmetalle und den Metallen der Gruppen II, III und IV der Tabelle des periodischen Systems.

10. Pulver nach Anspruch 9, dadurch gekennzeichnet, daß sie zwischen 75 und 98 Mol-% Zirkoniumoxyd enthalten.

11. Pulver nach einem der Ansprüche 7 bis 10, die durch ein Verfahren gemäß einem der Ansprüche 1 bis 6 erhalten werden können.

FIG. 1

Fig. 2

Fig. 3

Fig. 4

Fig. 5

Fig. 6

Fig. 7